# EUROPEAN PATENT SPECIFICATION

(11) **EP 0 373 961 B1**
(45) Date of publication and mention of the grant of the patent: **22.05.1996**
(21) Application number: 89313156.5
(22) Date of filing: 15.12.1989
(51) Int. Cl.: G06F 15/02

(54) **Portable computer and corresponding method**
Tragbarer Rechner und zugehöriges Verfahren
Ordinateur portatif et méthode correspondante

(30) Priority: 15.12.1988 JP 316838/88; 27.12.1988 JP 330138/88
(43) Date of publication of application: 20.06.1990
(73) Proprietor: SONY CORPORATION, Tokyo 141 (JP)
(72) Inventor: Hirayama, Tomoshi c/o Patents Division Sony Corp., Shinagawa-ku Tokyo 141 (JP)
(74) Representative: Cotter, Ivan John

(56) References cited:
- EP-A- 0 251 477
- WO-A-89/01658
- DE-A- 2 537 400
- DE-A- 3 520 894
- GB-A- 2 183 886
- IBM TECHNICAL DISCLOSURE BULLETIN, vol. 26, no. 8, January 1984, page 4381, New York, US; J.P. VINCENT et al.: "Selecting a daily calendar from a monthly calendar"

## Description

This invention relates to portable computers.

A portable computer has been proposed which incorporates therein a central processing unit (CPU) for controlling schedule data such as diary data, and a display portion for displaying the schedule data. With this computer, when the user wants to see and compare schedules on two different dates, the user has to operate keys to input two dates alternately to access the schedules of the respective dates.

Moreover, when the user wants to see desired data, the user has to input a particular keyword in the data to retrieve desired data. Thus, when the user wants to see the desired data very often, these operations are cumbersome, and also particular data cannot be accessed immediately.

As to these disadvantages, GB-A-2 183 886 discloses an apparatus and method as set out in the preamble of claims 1 and 3, respectively.

Furthermore, when the user wants to see a schedule for "today", the user has to operate a plurality of keys such as a year key, a month key and a day key. Also the user has to operate a "retrieval key", a "check key" and so on. Therefore, the user cannot check the schedule for "today" without cumbersome operations.

According to the present invention, there is provided a portable computer and method as set out in claims 1 and 3, respectively.

Thus an embodiment of the present invention can provide a portable computer in which the user can see a predetermined schedule merely by depressing an exclusive operation key.

The invention will now be described by way of example with reference to the accompanying drawings, throughout which like parts are referred to by like references, and in which:
Figure 1 is a front view of an embodiment of portable computer according to the present invention;
Figure 2 is a block diagram showing a hardware arrangement of the computer of Figure 1;
Figure 3 is a pictorial representation of an example of a picture displayed on a display screen of the computer; and
Figures 4 is a flow chart for explaining the operation of the computer.

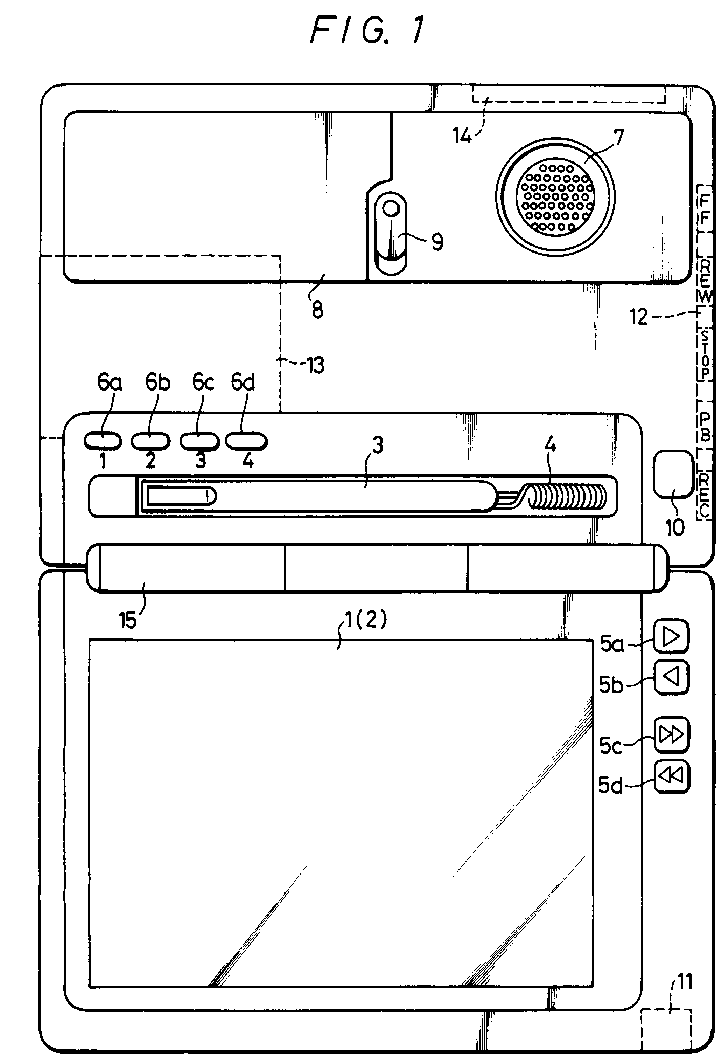

Referring to Figure 1, the portable computer comprises a display portion 1 formed by a liquid crystal display (LCD) device or the like, which displays thereon image data derived from a CPU which will be explained later. A so-called input tablet 2 can be formed of a so-called transparent touch sensor, and is provided on the surface of the display portion 1. A tablet pen 3 is placed on the front wall of the computer and is used to input desired data in co-operation with the input tablet 2. When the user takes the pen 3 and touches the input tablet 2 with the point thereof, information such as a touched position is supplied through a cord 4 to the CPU, thereby inputting desired data. Predetermined keys 5a, 5b, 5c, 5d and 6a, 6b, 6c, 6d are shown, and signals therefrom are also supplied to the CPU.

The computer also comprises a loudspeaker 7 and a battery compartment 8 in which a power source battery (not shown) is accommodated under a lid which is openable and/or closable by operating a locking mechanism 9. The computer is powered ON and OFF by a power switch 10.

Block portions shown by phantom lines in Figure 1 show the positions of various mechanisms provided on the side wall of the computer, including a microphone 11, and an operation key 12 used to effect so-called solid state IC recording which will be described later. When the key 12 is operated, an audio signal supplied to the microphone 11 is recorded and can be reproduced from the loudspeaker 7. There is also an IC card socket 13 to which IC cards such as a read only memory (ROM), a random access memory (RAM) and the like can be connected, and a socket 14 to which can be connected an external apparatus in order to expand the facilities of the computer.

A hinge 15 incorporates therein a flexible substrate or the like to transmit signals, so that the user can fold the computer in two without electrical problems. The computer is about 29 cm high and about 20.5 cm wide in the extended state. in the folded state, it is about 4 cm thick. The size of the display portion 1 is about 15 cm x 10 cm.

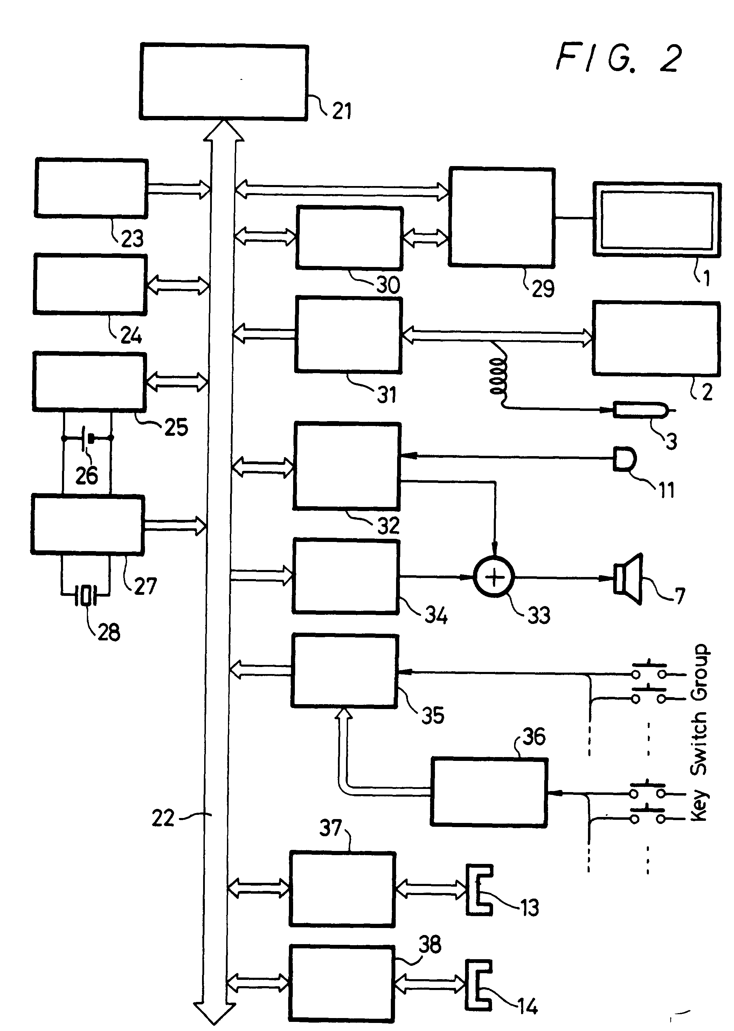

In Figure 2, if will be seen that a CPU 21 is connected through a bus line 22 to various kinds of functions ICs which will be explained below. A ROM 23 is shown to store therein, in addition to a system program of the whole computer, a Japanese kana-kanji converting program for a word processor function in the Japanese language, dictionary data for such kanji-kana conversion, a program for recognizing hand-written input data, and dictionary data for such recognizing program.

A RAM 24 provides a work area, and a back-up RAM 25 is provided with a power supply source 26. A timer IC 27 is driven by the power supply source 26, and counts a clock signal from a quartz oscillator 28 constantly to generate data of date and time at a certain time point.

The following elements are associated with the interconnection to the respective portions shown in Figure 2, and will be explained.

A display controller 29 controls the display portion 1. The display controller 29 is controlled by the CPU 21, and display data formed by the CPU 21 are written in a video-RAM 30. The data written in the video-RAM 30 are supplied to the display portion 1 via the display controller 29.

An interface circuit 31 is connected to the input tablet 2 and to the pen 3, and data written on the input tablet 2 are supplied to the CPU 21 via the interface circuit 31.

A solid state recording processing circuit 32 processes an audio signal from the microphone 11 in a predetermined signal processing manner such as analogue-to-digital (A/D) conversion. The audio signal thus processed is stored in the back-up RAM 25 via the CPU 21. The audio signal data stored in the back-up RAM 25 are supplied to the processing circuit 32, in which it is digital-to-analogue (D/A) converted, and the analogue audio signal data are supplied through a mixer 33 to the loudspeaker 7.

A so-called dialler circuit 34 is provided to generate an acoustic signal corresponding to a dual tone of a so-called push-type phone when supplied with data such as a desired telephone number and the like from the CPU 21. The acoustic signal from the dialler circuit 34 is supplied through the mixer 33 to the loudspeaker 7.

A key interface circuit 35 is shown to receive a signal supplied directly or via a power supply source circuit 36 from a key group such as the keys 5a to 5d, 6a to 6d, 10 and 12. The predetermined, converted signal is supplied from the key interface circuit 35 to the CPU 21. The power switch 10, the keys 6a to 6d and the key 12 except the stop button are connected to the interface circuit 35 via the power supply source circuit 36, whereby when these keys are operated, the power supply source circuit 36 is actuated, and information corresponding to the key operation is then fed therefrom to the interface circuit 35. An IC card interface circuit 37 is connected to the socket 13 to supply data from the IC card through the bus line 22 to the CPU 21. An interface circuit 38 is connected to the bus line 22 and to the socket 14 to expand the system of the computer.

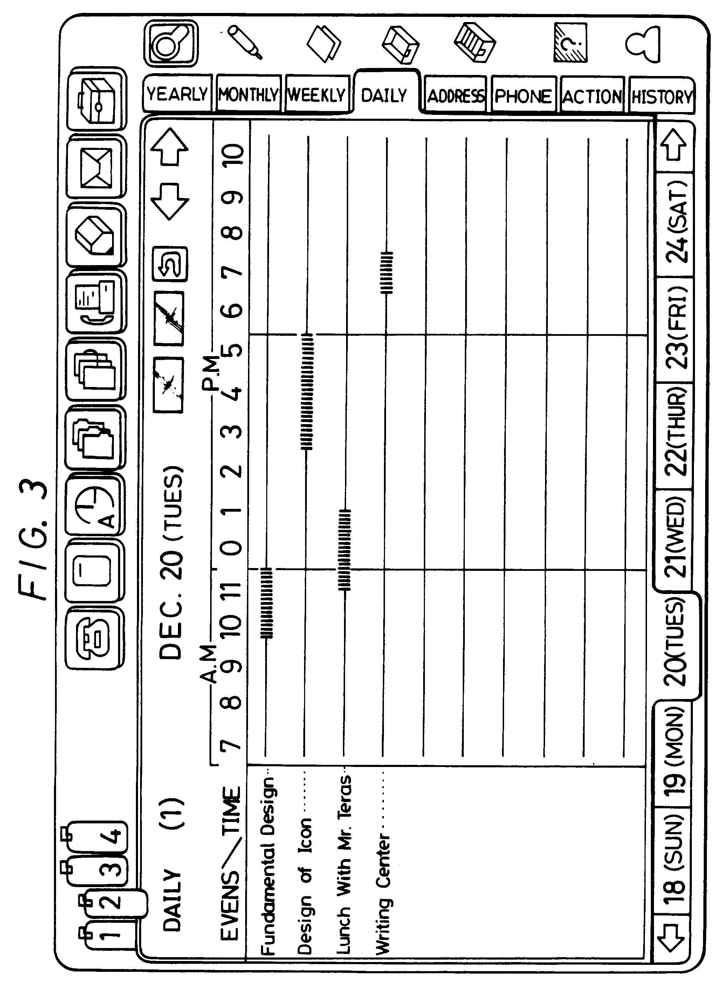

With this portable computer, if any one of the keys 6a to 6d, for example, the key 6b is depressed under the condition that an image indicating the schedule of "today" is displayed on the display portion 1 as, for example, shown in Figure 3, then the logic address of the page displayed will be stored in a predetermined address area of the back-up RAM 25. The thus stored condition is represented when a "bookmarker" on, for example, the upper left corner of the display portion 1 is inserted as [2]. Thus, a desired page is opened hereinafter. Then, if the key 6b is depressed, the stored logic address data will be read from the predetermined address area of the back-up RAM 25, thereby displaying the page indicated by the read logic address data.

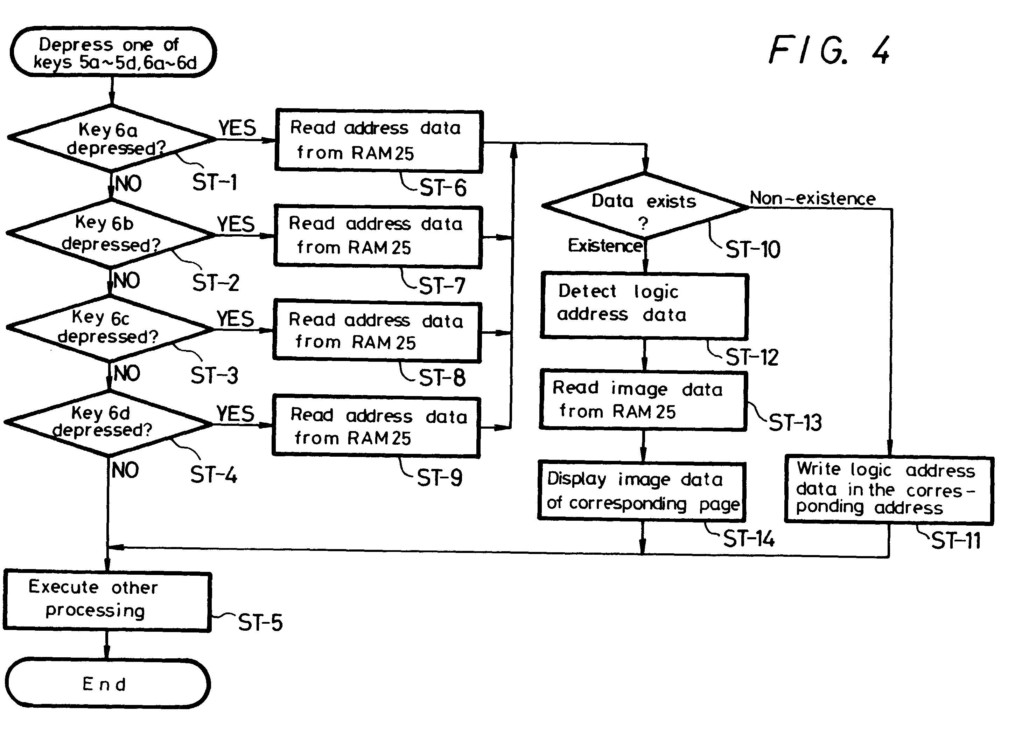

More specifically, a routine shown in a flow chart of Figure 4 is provided in the system program which is written in the ROM 23.

Referring to Figure 4, when any one of the keys 5a to 5d and 6a to 6d is depressed, the operation is started. Then, it is determined in each of decision steps ST-1 to ST-4 whether or not any one of the keys 6a to 6d is depressed. If a NO is output in all steps ST-1 to ST-4, then the routine proceeds to step ST-5, whereat other processing is executed. At the completion of the processing in step ST-5, the routine is ended. If a YES is output in any one of steps ST-1 to ST-4, corresponding address data stored in the back-up RAM 25 are read in steps ST-6 and ST-9. Further, existence or non-existence of data is judged in the next decision step ST-10. If it is determined in step ST-10 that no data exist, then the routine proceeds to step ST-11, whereat logic address data of the page displayed at this time are written in the corresponding address area of the RAM 25. If it is determined in step ST-10 that data exist, then the routine proceeds to step ST-12, whereat the logic address data of the data are detected. Then, the routine proceeds to step ST-13, in which image data of the page corresponding to the logic address data are read from the back-up RAM 25, and an image of the corresponding page is displayed on the display portion 1 in step ST-14.

Therefore, when the keys 6a to 6d are operated, a character [bookmarker] is inserted into the page opened at the time. When the same keys 6a to 6d are operated under the condition that any other page is opened, the page indicated by the character [bookmarker] can be accessed immediately, Thus, the user can operate this computer as if the user had slipped a bookmarker between the pages of the book. Thus, when the user puts [bookmarkers] in pages of two dates, the user can compare these pages by alternately opening them. Also, when the user puts the [bookmarkers] in the pages of data which are used very often, the user can readily see these pages.

Thus, the user can see the page corresponding to the desired condition (marked with the [bookmarker]) merely by depressing the desired one of the exclusive operations keys (keys 6a to 6d). Thus, the operation of the computer can be carried out with great ease with (only one operation).

Moreover, if any one of the keys 6a to 6d is depressed under the condition that the page, marked with the [bookmarker] is displayed on the display portion 1, then data on the corresponding address area of the RAM 25 will be erased and the [bookmarker] inserted may be removed.

## Claims

1. An electronic organiser, comprising:
computer control means (21) for controlling and organising data as pages;
input means (2, 3) coupled to the control means for entering said data into the organiser;
memory means (25) coupled to the control means for storing said data; display means (1) coupled to the control means and to the memory means for displaying at least one page of said data at a time; and
an exclusively dedicated operating key (6a to 6d) coupled to the control means and operable to cause a predetermined page of said data to be displayed, wherein the control means organises said data as pages of a book; and characterised by said operating key being operable for removing and placing an electronic bookmark on a displayed page of said data depending upon whether said page already has such a bookmark or not, and for causing a page on which such a bookmark has been placed to be displayed.

2. An organiser as claimed in claim 1, further comprising means (25) to store an address of a bookmarked page, and wherein the control means is operable upon operation of the operating key to determine whether a bookmarked page address is stored in the store means and if not to store the address of the currently displayed page in the store means, but if so to determine whether the stored bookmarked page address corresponds to the address of the currently displayed page and if so to erase the bookmarked page address from the store means, but if not to cause that page of data to be displayed which has an address corresponding to the bookmarked page address.

3. A method of operation of an electronic organiser comprising an input means, a memory means and a display means for entering, storing and displaying data, respectively, and an exclusively dedicated operating key, the method comprising organising the stored and displayed data as pages of a book and being characterised by detecting operation of the operating key and in response thereto removing or placing an electronic bookmark on a displayed page of the said data depending upon whether said page already has such a bookmark or not, or causing a page of said data presently not displayed on which such a bookmark has been placed to be displayed.

4. A method as claimed in claim 3, comprising the steps in response to detection of operation of the operating key of: determining whether such a bookmark has been placed and if not placing such a bookmark on the currently displayed page, but if so determining whether the placed bookmark corresponds to the currently displayed page and if so erasing the bookmark, but if not displaying the page corresponding to the bookmark.

## Patentansprüche

1. Elektronischer Organisator, mit:
einer Rechnersteuereinrichtung (21) zur Steuerung und Organisierung von Daten, beispielsweise Seiten;
einer Eingabeeinrichrung (2, 3), die mit der Steuereinrichtung gekoppelt ist, um die Daten in den Organisator einzugeben;
einer Speichereinrichtung (25), die mit der Steuereinrichtung gekoppelt ist, um die Daten zu speichern;
einer Anzeigeeinrichtung (1), die mit der Steuereinrichtung und mit der Speichereinrichtung gekoppelt ist, um zumindest eine Seite der Daten auf einmal anzuzeigen; und
einer exklusiv gewidmeten Betätigungstaste (6a bis 6d), die mit der Steuereinrichtung gekoppelt ist und betätigbar ist, damit veranlaßt wird, daß eine bestimmte Seite der Daten angezeigt wird, wobei die Steuereinrichtung die Daten als Seiten eines Buches organisiert;
dadurch gekennzeichnet, daß die Betätigungstaste betätigbar ist, um eine elektronische Buchmarkierung auf einer angezeigten Datenseite in Abhängigkeit davon zu entfernen oder anzuordnen, ob die Seite eine solche Buchmarkierung schon hat oder nicht, und um zu veranlassen, daß eine Seite, auf der eine solche Buchmarkeirung angeordnet wurde, angezeigt wird.

2. Organisator nach Anspruch 1, der außerdem eine Einrichtung (25) zum Speichern einer Adresse einer buchmarkierten Seite aufweist, und wobei die Steuereinrichtung bei Betätigung der Betätigungstaste entscheiden kann, ob eine buchmarkierte Seitenadresse in der Speichereinrichtung gespeichert ist, und wenn nicht, die Adresse der laufend angezeigten Seite in der Speichereinrichtung speichert, wenn ja jedoch entscheidet, ob die gespeicherte buchmarkierte Seitenadresse der Adresse der laufend angezeigten Seite entspricht, und wenn ja, die buchmarkierte Seitenadresse aus der Speichereinrichtung löscht, wenn nein jedoch veranlaßt, daß die Seite der Daten angezeigt wird, die eine Adresse entsprechend der buchmarkierten Seitenadresse hat.

3. Verfahren zur Betätigung eines elektronischen Organisators mit einer Eingabeeinrichtung, einer Speichereinrichtung und einer Anzeigeeinrichtung zur Eingabe, zum Speichern bzw. Anzeigen von Daten, und einer exklusiv gewidmeten Betätigungstaste, wobei das Verfahren die Organisation der gespeicherten und angezeigten Daten, beispielsweise Seiten eines Buchs, aufweist, und durch Ermitteln einer Betätigung der Betätigungstaste gekennzeichnet ist und in Abhängigkeit davon eine elektronische Buchmarkierung auf einer angezeigten Seite der Daten abhängig davon, ob die Seite schon eine solche Buchmarkierung hat oder nicht, entfernt oder anordnet, oder veranlaßt, daß eine Seite der Daten, die augenblicklich nicht angezeigt wird, auf der eine solche Buchmarkierung angeordnet wurde, angezeigt wird.

4. Verfahren nach Anspruch 3, das folgende Schritte abhängig von der Ermittlung der Betätigung der Betätigungstaste aufweist: Entscheidung, ob eine solche Buchmarkierung angeordnet wurde, und wenn nein, Anordnung einer solchen Buchmarkierung auf der laufend angezeigten Seite, aber wenn ja, Entscheidung, ob die angeordnete Buchmarkierung der laufend angezeigten Seite entspricht, und wenn ja, Löschen der Buchmarkierung, aber wenn nein, Anzeigen der Seite entsprechend der Buchmarkierung.

## Revendications

1. Organiseur électronique, comprenant:
- des moyens de commande par ordinateur (21) pour commander et organiser des données en pages;
- des moyens d'entrée (2, 3) couplés aux moyens de commande pour entrer lesdites données dans l'organiseur;
- des moyens de mémoire (25) couplés aux moyens de commande pour mémoriser lesdites données;
- des moyens d'affichage (1) couplés aux moyens de commande et aux moyens de mémoire pour afficher au moins une page desdites données à la fois; et
- une touche d'opération exclusivement spécialisée (6a à 6d) couplée aux moyens de commande et actionnable pour amener une page prédéterminée desdites données à être affichée, dans lequel lesdits moyens de commande organisent lesdites données en pages de livre; et
caractérisé en ce que ladite touche d'opération est actionnable pour enlever et placer un signet électronique sur une page affichée desdites données selon que ladite page a déjà un tel signet ou non, et pour amener une page sur laquelle un tel signet a été placé à être affichée.

2. Organiseur selon la revendication 1, comprenant en outre des moyens (25) pour mémoriser une adresse d'une page avec signet, et dans lequel les moyens de commande sont actionnables lors de l'actionnement de la touche d'opération pour déterminer si une adresse de page avec signet est mémorisée dans les moyens de mémorisation et, si non, pour mémoriser l'adresse de la page présentement affichée dans les moyens de mémoire, et, si oui, pour déterminer si l'adresse de page avec signet mémorisée correspond à l'adresse de la page présentement affichée et, si oui, pour effacer l'adresse de page avec signet dans les moyens de mémoire et, si non, pour amener la page de données à être affichée qui a une adresse correspondant à l'adresse de la page avec signet.

3. Méthode d'utilisation d'un organiseur électronique comprenant des moyens d'entrée, des moyens de mémoire et des moyens d'affichage pour entrer, mémoriser et afficher des données, respectivement, et une touche d'opération spécialisée exclusivement, la méthode comprenant les étapes consistant à organiser les données mémorisées et affichées en pages d'un livre et étant caractérisée par la détection de l'actionnement de la touche d'opération et, en réponse à celle-ci, enlever ou placer un signet électronique sur une page affichée desdites données selon que ladite page a déjà un tel signet ou non, pour amener une page desdites données présentement non affichée sur laquelle un tel signet a été placé à être affichée.

4. Méthode selon la revendication 3, comprenant les étapes consistant, en réponse à la détection de l'actionnement de la touche d'opération, à: déterminer si un tel signet a été placé et, si non, placer un tel signet sur la page présentement affichée, et, si oui, déterminer si le signet placé correspond à la page présentement affichée et, si oui, effacer le signet, et, si non, afficher la page correspondant au signet.
